# EUROPEAN PATENT APPLICATION

(11) **EP 3 828 237 A1**
(43) Date of publication of application: **02.06.2021**
(21) Application number: 19841595.2
(22) Date of filing: 17.07.2019
(51) Int. Cl.: C08L 77/00, C08J 5/04, C08K 5/5313, C08L 1/02

(54) **FLAME RETARDANT RESIN COMPOSITION AND METHOD FOR PRODUCING SAME**

(30) Priority: 23.07.2018 JP 2018137661
(71) Applicant: Unitika Ltd., Amagasaki-shi, Hyogo 660-0824 (JP)
(72) Inventor: NAKAI, Miho, Uji-shi, Kyoto 611-0021 (JP); NOGUCHI, Shota, Uji-shi, Kyoto 611-0021 (JP); KUMAZAWA, Shohei, Uji-shi, Kyoto 611-0021 (JP); KAMIKAWA, Hiroo, Uji-shi, Kyoto 611-0021 (JP)
(74) Representative: Vossius & Partner Patentanwälte Rechtsanwälte mbB
(86) International application number: PCT/JP2019/028127
(87) International publication number: WO 2020/022153

(57) **Abstract**

The present invention provides a resin composition excellent in mechanical properties, stiffness properties, appearance characteristics, flame retardancy and metal corrosion resistance and having a small environmental load, compared to those of conventional polyamide-based flame-retardant resin compositions. The present invention related to a flame-retardant resin composition, comprising: 35 to 85% by mass of a polyamide resin (A); 0.45 to 30% by mass of a cellulose fiber (B) having an average fiber diameter of 10 µm or less; 4.5 to 40% by mass of metal phosphinate (C); and 0 to 35% by mass of a reinforcing material (D) other than the cellulose fiber.

## Description

### TECHNICAL FIELD

The present invention relates to a flame-retardant resin composition containing a polyamide resin and a method for producing the same.

### BACKGROUND ART

Among engineering resins, polyamide resins are widely used in electronic/electrical applications, OA equipment applications, automobile applications, etc. due to their characteristics of high heat resistance and extremely good molding fluidity. Flame retardancy is required for these applications, and flame-retardant polyamide resin compositions are often used.

As a method for making a polyamide resin flame-retardant, a method of blending melamine cyanurate is the mainstream for the polyamide resin to which no filler is added. This method has a small environmental load because no halogen is used, however, its strength and stiffness properties are insufficient because no filler is added. Since a flame-retardant effect of melamine cyanurate is low in a polyamide resin to which a glass fiber and an inorganic filler are added to improve the strength and stiffness properties, a composition containing brominated polystyrene and antimony oxide as flame retardants has become the mainstream. However, this composition has a problem that the environmental load is high because bromine is a halogen.

In recent years, in polyamide resins to which a glass fiber and an inorganic filler are added, a composition containing a non-halogen phosphorus-based flame retardant has been studied. For example, Patent Literature 1 proposes a resin composition containing a polyamide resin, an inorganic filler, melamine phosphate, and metal phosphinate. However, metal phosphinate having a particularly high flame-retardant effect among phosphorus-based flame retardants has such a problem of metal corrosion resistance that metal parts such as extruder screws and dies, and molding machine screws and molds are severely worn during melt processing. There is also a problem of an appearance of a molded product due to deterioration of mold transferability due to a filler.

Even if the amount of glass blended and the amount of inorganic filler blended are reduced in order to reduce the amount of wear or improve the appearance, there is a problem that a dripping phenomenon occurs in a combustion test of the flame-retardant standard UL94, flame retardancy levels V-1 and V-0 cannot be achieved, and the flame retardancy decreases. In order to prevent dripping, for example, there is a method of blending a polytetrafluoroethylene resin having a fibril-forming ability as in Patent Literature 2. However, since fluorine which is a halogen is contained, there is still a problem of environmental load. V-0 in the UL94 standard is an evaluation rank recognized as being unlikely to cause ignition and having excellent flame retardancy in the standard defined by Under Writers Laboratories Inc. of the United States. V-1 is the second highest flame-retardancy evaluation rank after V-0.

### CITATIONS LIST

### PATENT LITERATURE

Patent Literature 1: Japanese Patent Laid-Open Publication No. 2007-231094
Patent Literature 2: Japanese Patent Laid-Open Publication No. 2014-47308

### SUMMARY OF INVENTION

### TECHNICAL PROBLEMS

The present invention is intended to solve the above-mentioned problems, and its object is to provide a resin composition excellent in mechanical properties, stiffness properties, appearance characteristics, flame retardancy and metal corrosion resistance and having a smaller environmental load, compared to those of conventional polyamide-based flame-retardant resin compositions.

### SOLUTIONS TO PROBLEMS

As a result of intensive research to solve the above problems, the present inventors have found that the above object is achieved by blending a specific cellulose fiber, metal phosphinate, and, optionally, an inorganic filler with a polyamide resin, thus arriving at the present invention.
<1> A flame-retardant resin composition, comprising:
   35 to 85% by mass of a polyamide resin (A);
   0.45 to 30% by mass of a cellulose fiber (B) having an average fiber diameter of 10 µm or less;
   4.5 to 40% by mass of metal phosphinate (C); and
   0 to 35% by mass of a reinforcing material (D) other than the cellulose fiber.
<2> A flame-retardant resin composition of <1>, wherein the metal phosphinate (C) is a compound represented by following general formula (I) or (II); 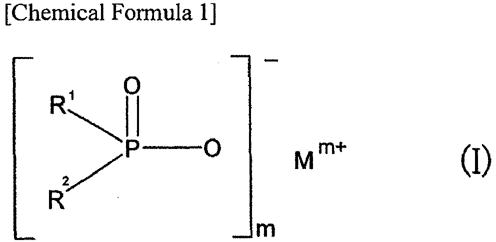 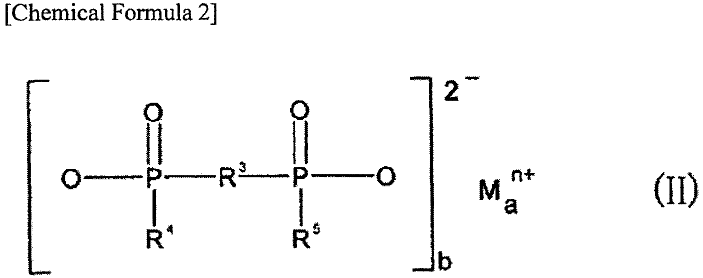
   wherein R¹, R², R⁴ and R⁵ each independently represent a linear or branched alkyl group having 1 to 16 carbon atoms or a phenyl group;
   R³ represents a linear or branched alkylene group having 1 to 10 carbon atoms, an arylene group having 6 to 10 carbon atoms, an arylalkylene group, or an alkylarylene group;
   M represents a calcium ion, an aluminum ion, a magnesium ion or a zinc ion;
   m is 2 or 3; and
   n, a and b are integers satisfying the relation of 2 × b = n × a.
<3> A flame-retardant resin composition of <1> or <2>, wherein the reinforcing material (D) other than the cellulose fiber is one or more kinds of reinforcing materials selected from the group consisting of a fibrous reinforcing material, an acicular reinforcing material and a plate-shaped reinforcing material.
<4> A flame-retardant resin composition of any one of <1> to <3>, wherein a content of the metal phosphinate (C) is 8 to 40% by mass.
<5> A flame-retardant resin composition of any one of <1> to <4>, wherein an average fiber diameter of the cellulose fiber (B) is 1 to 1000 nm, and a content of the metal phosphinate (C) is 15 to 40% by mass.
<6> A flame-retardant resin composition of <5>, wherein
   a content of the polyamide resin (A) is 62 to 79% by mass,
   a content of the cellulose fiber (B) is 1 to 8% by mass, and
   the average fiber diameter of the cellulose fiber (B) is 40 to 80 nm.
<7> A method for producing the flame-retardant resin composition of any one of <1> to <6>, comprising:
   performing a polymerization reaction of a monomer constituting the polyamide resin (A) in the presence of the cellulose fiber (B), and then
   melt-kneading the polyamide resin (A) in which the cellulose fiber (B) is dispersed together with the metal phosphinate (C) and the reinforcing material (D).

### ADVANTAGEOUS EFFECTS OF INVENTION

According to the present invention, it is possible to provide a resin composition excellent in mechanical properties, stiffness properties, appearance characteristics, flame retardancy and metal corrosion resistance and having a small environmental load, compared to those of conventional polyamide-based flame-retardant resin compositions.

Since the resin composition of the present invention does not contain a halogen compound and an antimony compound, loads to the environment are small.

### BRIEF DESCRIPTION OF DRAWINGS

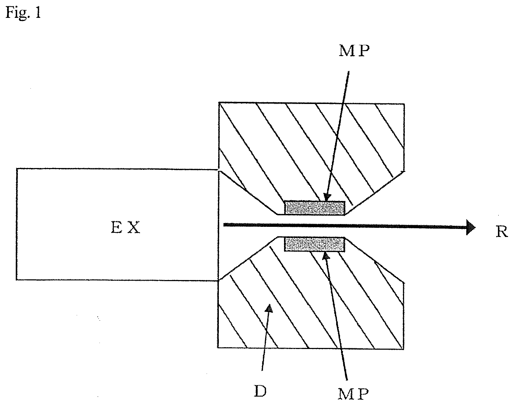

FIG. 1 is a schematic cross-sectional view of a twin screw kneading extruder and a die for explaining a method of evaluating metal corrosion resistance in Examples.

### DESCRIPTION OF EMBODIMENT

The flame-retardant resin composition of the present invention is a resin composition containing a cellulose fiber (B) and metal phosphinate (C) with respect to a polyamide resin (A). The flame-retardant resin composition of the present invention may further contain a reinforcing material (D) other than cellulose fiber and other additives.

The polyamide resin (A) used in the present invention is a polymer having an amide bond formed from an amino acid, lactam or diamine and a dicarboxylic acid.

Examples of amino acids include 6-aminocaproic acid, 11-aminoundecanoic acid, 12-aminododecanoic acid, and paraaminomethylbenzoic acid.

Examples of lactam include ε-caprolactam and ω-laurolactam.

Examples of diamine include tetramethylenediamine, hexamethylenediamine, nonamethylenediamine, decamethylenediamine, undecamethylenediamine, dodecamethylenediamine, 2,2,4-/2,4,4-trimethylhexamethylenediamine, 5-methyl-nonamethylenediamine, 2,4-dimethyl octamethylene diamine, metaxylylene diamine, paraxylylene diamine, 1,3-bis(aminomethyl) cyclohexane, 1-amino-3-aminomethyl-3,5,5-trimethylcyclohexane, 3,8-bis(aminomethyl) tricyclodecane, bis(4-aminocyclohexyl) methane, bis(3-methyl-4-aminocyclohexyl) methane, 2,2-bis(4-aminocyclohexyl) propane and bis(aminopropyl) piperazine.

Examples of dicarboxylic acid include adipic acid, suberic acid, azelaic acid, sebacic acid, dodecanedioic acid, terephthalic acid, isophthalic acid, naphthalenedicarboxylic acid, 2-chloroterephthalic acid, 2-methylterephthalic acid, 5-methylisophthalic acid, 5-sodium sulfoisophthalic acid, hexahydroterephthalic acid, hexahydroisophthalic acid, and diglycolic acid.

Specific examples of the polyamide resin used in the present invention include polycaproamide (polyamide 6), polytetramethyleneadipamide (polyamide 46), polyhexamethyleneadipamide (polyamide 66), polyhexamethylenesebacamide (polyamide 610), polyhexamethylenedodecamide (polyamide 612), polyundecamethyleneadipamide (polyamide 116), polyundecaneamide (polyamide 11), polydodecaneamide (polyamide 12), polytrimethylhexamethyleneterephthalamide (polyamide TMHT), polyhexamethylene terephthalamide (polyamide 6T), polyhexamethylene isophthalamide (polyamide 6I), polyhexamethyleneterephthal/isophthalamide (polyamide 6T/6I), polybis(4-aminocyclohexyl)methanedodecamide (polyamide PACM12), polybis(3-methyl-4-aminocyclohexyl)methanedodecamide (polyamidodimethyl PACM12), poly(meta-xylyleneadipamide) (polyamide MXD6), polynonamethylene terephthalamide (polyamide 9T), polydecamethylene terephthalamide (polyamide 10T), polyundecamethyleneterephthalamide (polyamide 11T), polyundecamethylenehexahydroterephthalamide (polyamide 11T(H)), and copolymers and mixtures thereof. Among them, polyamide 6, polyamide 66, polyamide 11, polyamide 12, and copolymers and mixtures thereof are preferable, polyamide 6 is more preferable because of its high slidability, and polyamide 66 is more preferable because of its high mechanical properties.

The molecular weight of the polyamide resin is not particularly limited, and for example, the polyamide resin may have a molecular weight such that a relative viscosity described later can be achieved.

The polyamide resin can be produced by a known polycondensation method or a method in which a solid phase polymerization method is further used in combination, or can be obtained as a commercially available product. Examples of a commercially available product of polyamide resins include A1030BRL (polyamide 6) made by Unitika Ltd. and A125 (polyamide 66) made by Unitika Ltd.

The content of the polyamide resin (A) constituting the resin composition of the present invention needs to be 35 to 85% by mass, and from the viewpoint of further improving mechanical properties, stiffness properties, flame retardancy, metal corrosion resistance and/or appearance, the content is preferably 40 to 85% by mass, more preferably 50 to 85% by mass, still more preferably 62 to 85% by mass, most preferably 62 to 79% by mass. If the content of the polyamide resin (A) is too small, the amount of the resin component is too small, so that melt-kneading becomes difficult. If the content of the polyamide resin (A) is too large, sufficient flame retardancy cannot be obtained. The content of the polyamide resin (A) is a value with respect to a total amount of the flame-retardant resin composition containing the polyamide resin of the present invention. Specifically, the content of the polyamide resin (A) is a value when a total amount of the polyamide resin (A), the cellulose fiber (B), the metal phosphinate (C), and the reinforcing material (D) other than the cellulose fiber is 100% by mass.

In the present invention, the cellulose fiber (B) is a cellulose fiber having a specific average fiber diameter described later. Since the flame-retardant resin composition of the present invention contains the cellulose fiber (B) together with the metal phosphinate (C) described later, not only the mechanical properties are sufficiently improved, but also the flame retardancy is sufficiently improved. Even if the flame-retardant resin composition contains only one of the cellulose fiber (B) and the metal phosphinate (C), sufficient flame retardancy cannot be obtained.

Examples of the cellulose fiber include cellulose fibers derived from wood, rice straw, cotton, hemp and kenaf, and additionally biological cellulose fibers such as bacterial cellulose, valonia cellulose and sea-squirt cellulose. Examples of the cellulose fiber also include regenerated cellulose and cellulose derivatives.

In the present invention, the cellulose fiber is effective not only as a reinforcing material but also as an anti-drip agent at burning. In order to obtain a resin composition having excellent flame retardancy as well as mechanical properties, it is preferable to uniformly disperse the cellulose fiber in the resin composition without aggregating the cellulose fiber. Thus, the cellulose fiber to be used is not particularly limited, not depending on whether the cellulose fiber is chemically unmodified or chemically modified as long as it can be finally uniformly dispersed in the resin composition,. The cellulose fiber is preferably used by being dispersed in a polyamide resin in advance. When the cellulose fiber is dispersed in the polyamide resin in advance, it is preferable to use a method in which the cellulose fiber and a monomer constituting the polyamide resin are uniformly mixed and the polyamide resin is polymerized. When such a method is selected, the cellulose fiber is preferably an unmodified cellulose fiber having a high affinity with the monomer constituting the polyamide resin, or a modified cellulose fiber in which a part of a cellulose-derived hydroxyl group is substituted with a hydrophilic or hydrophobic substituent. Examples of the hydrophilic substituent include a carboxyl group, a carboxymethyl group, and a phosphate ester group. Examples of the hydrophobic substituent include a silyl ether group and an acetyl group.

In the present invention, it is desirable that the average fiber diameter of the cellulose fibers is as small as possible. The smaller the average fiber diameter of the cellulose fibers, the stronger a network structure of the cellulose fiber formed in a matrix resin, and the better the mechanical properties.

The cellulose fiber contained in the flame-retardant resin composition need to have an average fiber diameter of 10 µm or less, and from the viewpoint of further improving the flame retardancy, in particular, the average fiber diameter is preferably 1000 nm or less, more preferably 500 nm or less, still more preferably 300 nm or less, particularly preferably 100 nm or less. In the case of cellulose fibers having an average fiber diameter of more than 10 µm, it is difficult to form a network structure in the matrix resin, so that the mechanical properties and flame retardancy of the resin composition are greatly impaired. The lower limit of the average fiber diameter is not particularly limited, and is preferably 1 nm or more in consideration of productivity of cellulose fiber. The average fiber diameter of the cellulose fibers is preferably 1 to 1000 nm, more preferably 5 to 500 nm, still more preferably 40 to 80 nm, particularly preferably 40 to 70 nm, from the viewpoint of further improving mechanical properties, stiffness properties, flame retardancy, metal corrosion resistance and/or appearance.

In order to make the average fiber diameter of the cellulose fibers in the resin composition 10 µm or less, it is preferable to use the cellulose fiber, to be blended in the polyamide resin, having an average fiber diameter of 10 µm or less. As such cellulose fiber having an average fiber diameter of 10 µm or less, microfibrillated cellulose fiber prepared by splitting cellulose fiber is preferable. For a technique for microfibrillation, various crushing apparatuses such as a ball mill, a stone mill crusher, a high-pressure homogenizer and a mixer can be used. As the cellulose fiber, a commercially available product, for example, "Celish" made by Daicel Fine Chem Ltd. can be used.

As the cellulose fiber having an average fiber diameter of 10 µm or less, cellulose fiber aggregates sorted as waste threads in the production steps of fiber products using cellulose fiber can also be used. Examples of the production steps of fiber products include steps of spinning, weaving, producing nonwoven fabric and processing of fiber products. The cellulose fiber aggregates in these steps are obtained as waste threads after the cellulose fiber passes these steps, and hence are formed of cellulose fiber made fine.

As the cellulose fiber having an average fiber diameter of 10 µm or less, bacterial cellulose fiber produced by bacteria can also be used; for example, a bacterial cellulose produced by acetic acid bacteria of the genus Acetobacter as producing bacteria can also be used. A plant cellulose fiber is formed through bundling of cellulose molecular chains, and is formed through bundling of very fine microfibrils; however, the cellulose fiber produced by the acetic acid bacteria is of a ribbon shape of 20 to 50 nm in width, and forms an extremely fine network as compared to plant cellulose fiber.

Further alternatively, as the cellulose fiber having an average fiber diameter of 10 µm or less, for example, cellulose fiber made fine may also be used which are obtained by oxidizing cellulose fiber in the presence of an N-oxyl compound, then washing with water and subjecting to a physical defibration step. As the N-oxyl compound, various compounds are available; however, for example, 2,2,6,6-tetramethylpiperidine-1-oxyl radical (hereinafter, described as "TEMPO") as described in Cellulose (1998), 5, 153-164 is preferable. Such a compound is added to a reaction aqueous solution within the range of a catalytic quantity. To the aqueous solution, sodium hypochlorite or sodium chlorite is added as a co-oxidant, and an alkali metal bromide is added, and thus the reaction is allowed to proceed. An alkaline compound such as an aqueous sodium hydroxide solution is added to keep the pH around 10, and the reaction is continued until no change in pH is observed. The reaction temperature may be room temperature. After the reaction, it is preferable to remove the N-oxyl compound remaining in the system. For cleaning, various methods such as filtration and centrifugal separation can be adopted. Subsequently, by using such various crushing apparatus as described above, the reaction product is subjected to the physical defibration step, and thus the cellulose fiber that is made fine can be obtained. The cellulose fiber obtained by the above method is a modified cellulose fiber in which a part of a cellulose-derived hydroxyl group is substituted with a carboxyl group.

In the cellulose fiber in the resin composition of the present invention, an aspect ratio ((average fiber length)/(average fiber diameter)), which is a ratio between the average fiber diameter and the average fiber length, is preferably 10 or more, more preferably 50 or more, still more preferably 100 or more. When the aspect ratio is 10 or more, the mechanical properties and flame retardancy of the obtained resin composition can be easily improved.

The content of the cellulose fiber (B) constituting the resin composition of the present invention needs to be 0.45 to 30% by mass and is preferably 0.5 to 30% by mass. If the content of the cellulose fiber is less than 0.45% by mass, sufficient mechanical properties and flame retardancy cannot be obtained. On the other hand, when the content of the cellulose fiber exceeds 30% by mass, it becomes difficult to contain the cellulose fiber in the resin composition, and fluidity of molten resin deteriorates, so that the moldability of the resin composition may be reduced, or the flame retardancy may deteriorate. The content of the cellulose fiber is preferably 1 to 10% by mass from the viewpoint of further improving the flame retardancy. The content of the cellulose fiber is preferably 1 to 8% by mass, more preferably 2 to 6% by mass, from the viewpoint of further improving mechanical properties, stiffness properties, flame retardancy, metal corrosion resistance and appearance. The content of the cellulose fiber (B) is a value with respect to the total amount of the flame-retardant resin composition containing the polyamide resin of the present invention. Specifically, the content of the cellulose fiber (B) is a value when the total amount of the polyamide resin (A), the cellulose fiber (B), the metal phosphinate (C), and the reinforcing material (D) other than the cellulose fiber is 100% by mass.

In the relative viscosity of the polyamide resin used in the present invention, from the viewpoint of further improving mechanical properties, stiffness properties, flame retardancy, metal corrosion resistance and/or appearance, when the relative viscosity of the polyamide resin is measured using a 96% sulfuric acid as a solvent at a temperature of 25°C and a concentration of 1 g/100 mL, the relative viscosity is preferably 1.5 to 5.0, more preferably 1.7 to 4.0. When the cellulose fiber is dispersed in the polyamide resin in advance, it is preferable that the relative viscosity of the polyamide resin in which the cellulose fiber is dispersed be within the above range.

The cellulose fiber has a very high affinity to water, and the smaller the average fiber diameter is, the more satisfactory dispersion condition the cellulose fiber can maintain. When the cellulose fiber loses water, the cellulose fibers strongly aggregate with each other through hydrogen bonds, and once such an aggregation is achieved, it becomes difficult for the cellulose fiber to take the same dispersion condition as before aggregation. In particular, the smaller the average fiber diameter of the cellulose fiber is, the more remarkable this tendency is. Accordingly, it is preferable that the cellulose fiber be blended with the polyamide resin under the condition that the cellulose fiber contains water. Thus, in the present invention, although the cellulose fiber may be blended with the polymerized polyamide resin by melt-kneading or the like, it is preferable to adopt a method in which the cellulose fiber is blended with the polyamide resin in advance by performing a polymerization reaction of the monomer constituting the polyamide resin in the presence of the cellulose fiber in a water-containing state. By such a production method, it becomes possible to disperse the cellulose fiber more uniformly in the polyamide resin without aggregating the cellulose fiber.

In a method for producing a resin composition of the present invention, the cellulose fiber can be dispersed in the polyamide resin in advance by mixing the monomer constituting the polyamide resin and an aqueous dispersion of the cellulose fiber having an average fiber diameter of 10 µm or less and performing a polymerization reaction.

When the cellulose fiber is dispersed in the polyamide resin in advance, the aqueous dispersion of the cellulose fiber is obtained by dispersing the cellulose fibers having an average fiber diameter of 10 µm or less in water, and the content of the cellulose fiber in the aqueous dispersion is preferably 0.01 to 100 parts by mass in relation to 100 parts by mass of water. The aqueous dispersion of cellulose fiber can be obtained by stirring purified water and the cellulose fiber with a mixer or the like. Then, the aqueous dispersion of the cellulose fiber and the monomer constituting the polyamide resin are mixed, and the resulting mixture is stirred with a mixer or the like to yield a uniform dispersion. Subsequently, the dispersion is heated to be increased in temperature to 150 to 270°C and stirred to allow the polymerization reaction to proceed. In this case, by gradually discharging the water vapor when the dispersion is heated, the water in the aqueous dispersion of the cellulose fiber can be discharged. When the above polyamide resin is polymerized, a catalyst such as phosphoric acid or phosphorous acid may be added as needed. And, after the completion of the polymerization reaction, the obtained resin composition is taken out, and then preferably cut into pellets.

When a bacterial cellulose is used as the cellulose fiber, as the aqueous dispersion of the cellulose fiber, an aqueous dispersion obtained by immersing the bacterial cellulose into purified water and by performing solvent substitution may also be used. When an aqueous dispersion of the bacterial cellulose prepared by solvent substitution is used, preferably, after the solvent substitution, the dispersion whose concentration is regulated to a predetermined concentration is mixed with the monomer constituting the polyamide resin, and then in the same manner as described above, the polymerization reaction is allowed to proceed.

In the above method, the cellulose fiber having an average fiber diameter of 10 µm or less is used as it is in the form of an aqueous dispersion for the polymerization reaction, and thus the cellulose fiber can be used in the polymerization reaction in a satisfactory dispersion condition. Moreover, the cellulose fiber used for the polymerization reaction is improved in dispersibility, through the interaction with the monomer being involved in the polymerization reaction and water, and also due to the stirring under such temperature condition as described above; thus, no mutual aggregation of the cellulose fibers occurs, and it is possible to obtain a resin composition in which the cellulose fiber having a small average fiber diameter is dispersed in a satisfactory manner. According to the above method, in some cases, the cellulose fiber contained in the resin composition after the completion of the polymerization reaction is smaller in average fiber diameter than the cellulose fiber added before the polymerization reaction.

Also, in the above method, the step of drying the cellulose fiber becomes unnecessary, and thus, the production can be made without passing through such a step that causes scattering of fine cellulose fibers. Therefore, it is possible to obtain the resin composition with a satisfactory operability. This method needs no substitution of water with an organic solvent for the purpose of achieving uniform dispersion of the monomer and the cellulose fiber, and hence is excellent in handling and enables the discharge of chemical substances during the production step to be suppressed.

The flame-retardant resin composition of the present invention contains the metal phosphinate (C) as a flame retardant.

The content of the metal phosphinate (C) in the present invention needs to be 4.5 to 40% by mass, particularly 5 to 40% by mass. The content of the metal phosphinate (C) is preferably 8 to 40% by mass, more preferably 15 to 40% by mass, still more preferably 15 to 30% by mass, and most preferably 15 to 25% by mass, from the viewpoint of further improving mechanical properties, stiffness properties, flame retardancy, metal corrosion resistance and/or appearance. If the content of the metal phosphinate (C) is less than 4.5% by mass, it becomes difficult to impart the required flame retardancy to the resin composition. On the other hand, when the content of the metal phosphinate (C) exceeds 40% by mass, although the resin composition is excellent in flame retardancy, the metal corrosion resistance is lowered, and, at the same time, melt-kneading becomes difficult. In addition, the resulting molded product may have inadequate mechanical properties. The content of the metal phosphinate (C) is a value with respect to the total amount of the flame-retardant resin composition containing the polyamide resin of the present invention. Specifically, the content of the metal phosphinate (C) is a value when the total amount of the polyamide resin (A), the cellulose fiber (B), the metal phosphinate (C), and the reinforcing material (D) other than the cellulose fiber is 100% by mass.

Examples of the metal phosphinate (C) of the present invention include a metal phosphinate represented by the following general formula (I) and a metal diphosphinate represented by the general formula (II). The metal phosphinate represented by the following general formula (I) is preferable from the viewpoint of further improving mechanical properties, stiffness properties, flame retardancy, metal corrosion resistance and/or appearance.

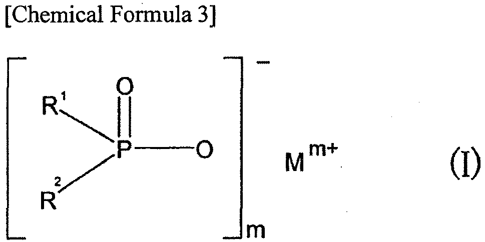

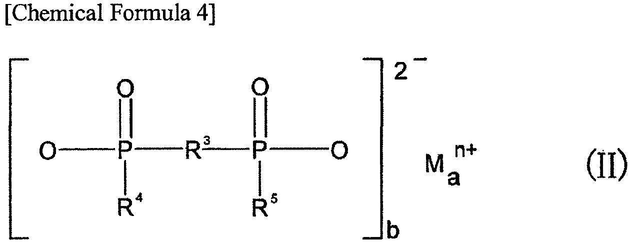

In these formulas, R¹, R², R⁴ and R⁵ are each independently required to be a linear or branched alkyl group having 1 to 16 carbon atoms or a phenyl group, and are each preferably a linear or branched alkyl group having 1 to 8 carbon atoms or a phenyl group, more preferably a methyl group, an ethyl group, an n-propyl group, an isopropyl group, an n-butyl group, a tert-butyl group, an n-pentyl group, an n-octyl group or a phenyl group, still more preferably an ethyl group. From the viewpoint of further improving flame retardancy, it is more preferable that R¹, R², R⁴ and R⁵ be each independently a linear or branched alkyl group having 1 to 5 (particularly 1 to 3) carbon atoms. R¹ and R² may form a ring with each other, and R⁴ and R⁵ may form a ring with each other.

R³ is required to be a linear or branched alkylene group having 1 to 10 carbon atoms, or an arylene group having 6 to 10 carbon atoms, an arylalkylene group or an alkylarylene group. Examples of the linear or branched alkylene group having 1 to 10 carbon atoms include: a methylene group, an ethylene group, an n-propylene group, an isopropylene group, an isopropylidene group, an n-butylene group, a tert-butylene group, an n-pentylene group, an n-octylene group and an n-dodecylene group. Examples of the arylene group having 6 to 10 carbon atoms include a phenylene group and a naphthylene group. Examples of the alkylarylene group include a methylphenylene group, an ethylphenylene group, a tert-butylphenylene group, a methylnaphthylene group, an ethylnaphthylene group and a tert-butylnaphthylene group. Examples of the arylalkylene group include a phenylmethylene group, a phenylethylene group, a phenylpropylene group and a phenylbutylene group.

M represents a metal ion. Examples of the metal ion include calcium ion, aluminum ion, magnesium ion and zinc ion. Among them, aluminum ion and zinc ion are preferable, and aluminum ion is more preferable.

Each of m and n represents the valence of the metal ion. The character of m is 2 or 3. The character of a represents the number of the metal ions, b represents the number of the diphosphinic acid ions, and n, a and b are the integers satisfying the relation "2 × b = n × a."

The metal phosphinate represented by the general formula (I) and the metal diphosphinate represented by the general formula (II) are produced in aqueous solutions by using the corresponding phosphinic acid and diphosphinic acid, respectively, and metal carbonates, metal hydroxides or metal oxides. The metal phosphinate represented by the general formula (I) and the metal diphosphinate represented by the general formula (II) are usually present as monomers; however, depending on the reaction conditions, the metal phosphinate and the metal diphosphinate may be present in the form of a polymeric phosphinate having a degree of condensation of 1 to 3.

Specific examples of the metal phosphinate represented by the general formula (I) include: calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate and zinc diphenylphosphinate. Among these, because of being excellent in the balance between flame retardancy and electrical properties, aluminum diethylphosphinate and zinc diethylphosphinate are preferable, and aluminum diethylphosphinate is more preferable.

Examples of the diphosphinic acid used for the production of the metal diphosphinate include methane-di(methylphosphinic acid) and benzene-1,4-di(methylphosphinic acid).

Specific examples of the metal diphosphinate represented by the general formula (II) include: calcium methane-di(methylphosphinate), magnesium methane-di(methylphosphinate), aluminum methane-di(methylphosphinate), zinc methane-di(methylphosphinate), calcium benzene-1,4-di(methylphosphinate), magnesium benzene-1,4-di(methylphosphinate), aluminum benzene-1,4-di(methylphosphinate) and zinc benzene-1,4-di(methylphosphinate). Among these, because of being excellent in the balance between flame retardancy and electrical properties, aluminum methane-di(methylphosphinate) and zinc methane-di(methylphosphinate) are preferable.

Specific examples of the commercial products of the metal phosphinate (C) include the following products made by Clariant GmbH: "Exolit OP1230", "Exolit OP1240", "Exolit OP1312", "Exolit OP1314", and "Exolit OP1400".

The flame-retardant resin composition of the present invention may or may not contain the reinforcing material (D) other than the cellulose fiber.

Examples of the reinforcing material (D) other than the cellulose fiber include a fibrous reinforcing material. Examples of the fibrous reinforcing material include glass fiber, carbon fiber, boron fiber, asbestos fiber, polyvinyl alcohol fiber, polyester fiber, acrylic fiber, aramid fiber, polybenzoxazole fiber, kenaf fiber, bamboo fiber, hemp fiber, bagasse fiber, high strength polyethylene fiber, alumina fiber, silicon carbide fiber, potassium titanate fiber, brass fiber, stainless steel fiber, steel fiber, ceramic fiber and basalt fiber. Among these, glass fiber, carbon fiber and aramid fiber are preferable because of being high in the improvement effect of mechanical properties, having heat resistance capable of withstanding the heating temperature during melt-kneading with the polyamide resin, and being easily available. Specific examples of the commercial products of the glass fiber include "CS3G225S" made by Nitto Boseki Co., Ltd. and "T-781H" made by Nippon Electric Glass Co., Ltd., and specific examples of the commercial products of the carbon fiber include "HTA-C6-NR" made by Toho Tenax Co., Ltd. The fibrous reinforcing materials may be used each alone or in combinations thereof.

The fiber length and the fiber diameter of the fibrous reinforcing material are not particularly limited; however, the fiber length is preferably 0.1 to 7 mm, more preferably 0.5 to 6 mm. The fiber length of the fibrous reinforcing material falling within the range from 0.1 to 7 mm allows the resin composition to be reinforced without adversely affecting the moldability. The fiber diameter is preferably 3 to 20 µm, more preferably 5 to 13 µm. The fiber diameter falling within the range from 3 to 20 µm allows the resin composition to be efficiently reinforced without causing fiber breakage during melt-kneading. Examples of the cross-sectional shape of the fibrous reinforcing material include a circle, a rectangle, an ellipse, and other non-circular cross-sections; among these, a circle is preferable.

As the reinforcing material (D) other than cellulose, an acicular reinforcing material, or a plate-shaped reinforcing material may be used in addition to the fibrous reinforcing material. For example, the acicular reinforcing material and/or the plate-shaped reinforcing material may be used in place of or in addition to the fibrous reinforcing material. When the fibrous reinforcing material is used particularly in combination with an acicular reinforcing material and/or a plate-shaped reinforcing material, it is possible to reduce warping of the molded product or to improve the drip resistance during a flame-retardant test. Examples of the acicular reinforcing material include wollastonite, potassium titanate whiskers, zinc oxide whiskers, and magnesium sulfate whiskers. Examples of the plate-shaped reinforcing material include talc, mica, and glass flakes.

The flame-retardant resin composition of the present invention preferably contains the reinforcing material (D) other than cellulose, more preferably contains a fibrous reinforcing material and/or a plate-shaped reinforcing material, and still more preferably contains the fibrous reinforcing material (particularly glass fiber), from the viewpoint of further improving mechanical properties and stiffness properties.

The content of the reinforcing material (D) other than the cellulose fiber in the resin composition needs to be 35% by mass or less (that is, 0 to 35% by mass) in order to improve the metal corrosion resistance during processing, and the content of the reinforcing material (D) is preferably 25% by mass or less. If the content of the reinforcing material (D) exceeds 35% by mass, corrosion of metal parts such as nozzles, screws, and barrels of extruders when a resin composition is produced by melt-kneading, corrosion of metal parts such as nozzles, screws, and barrels of injection molding machines during molding processing, corrosion of molds, corrosion of dies for extrusion molding, and other corrosions may be problems. In addition, an appearance of a molded product may be a problem. The content of the reinforcing material (D) other than the cellulose fiber is preferably 1% by mass or more, more preferably 4% by mass or more, still more preferably 10% by mass or more, from the viewpoint of further improving mechanical properties and stiffness properties. In particular, when the flame-retardant resin composition of the present invention contains the plate-shaped reinforcing material, the content of the plate-shaped reinforcing material is preferably 10 to 33% by mass, more preferably 20 to 33% by mass, from the viewpoint of further improving mechanical properties, stiffness properties, flame retardancy and metal corrosion resistance. When two or more types of the reinforcing material (D) other than the cellulose fiber are contained, the total content thereof may be within the above range. The content of the reinforcing material (D) other than the cellulose fiber is a value with respect to the total amount of the flame-retardant resin composition containing the polyamide resin of the present invention. Specifically, the content of the reinforcing material (D) other than the cellulose fiber is a value when the total amount of the polyamide resin (A), the cellulose fiber (B), the metal phosphinate (C), and the reinforcing material (D) other than the cellulose fiber is 100% by mass.

The flame-retardant resin composition of the present invention may further contain a flame-retardant aid. Examples of the flame-retardant aid include a nitrogen-based flame retardant, a nitrogen-phosphorus-based flame retardant, an inorganic flame retardant, and hydrazine-based compounds.

Examples of the nitrogen-based flame retardant include a melamine-based compound, and a salt between cyanuric acid or isocyanuric acid and a melamine compound. Specific examples of the melamine-based compound include: melamine, melamine derivatives, compounds having structure similar to melamine, and condensation products of melamine. More specific examples of the melamine-based compound may include compounds having triazine skeleton such as melamine, ammelide, ammeline, formoguanamine, guanyl melamine, cyanomelamine, benzoguanamine, acetoguanamine, succinoguanamine, melam, melem, meton and melon; sulfuric acid salts thereof; and melamine resins. The salt between cyanuric acid or isocyanuric acid and a melamine compound means an equimolar product composed of one of cyanuric acids or one of isocyanuric acids and a melamine-based compound.

Examples of the nitrogen-phosphorus-based flame retardant include adducts (melamine adducts) formed from melamine or a condensation product thereof and a phosphorus compound, and phosphazene compounds.

Examples of the phosphorus compound constituting the melamine adduct include phosphoric acid, orthophosphoric acid, phosphonic acid, phosphinic acid, metaphosphoric acid, pyrophosphoric acid, triphosphoric acid, tetraphosphoric acid and polyphosphoric acid. Specific examples of the melamine adduct include melamine phosphate, melamine pyrophosphate, dimelamine pyrophosphate, melamine polyphosphate, melempolyphosphate and melampolyphosphate, and among these, melamine polyphosphate is preferable. The number of phosphorus atoms is preferably 2 or more, more preferably 10 or more.

Specific examples of the trade names of the phosphazene compounds include: "Rabitle FP-100" and "Rabitle FP-110" made by Fushimi Pharmaceutical Co., Ltd.; and "SPS-100" and "SPB-100" made by Otsuka Chemical Co., Ltd.

Examples of the inorganic flame retardant include: metal hydroxides such as magnesium hydroxide and calcium hydroxide; zinc borate; phosphates such as aluminum phosphate; phosphites such as aluminum phosphite; hypophosphites such as calcium hypophosphite; and calcium aluminates. These inorganic flame retardants may be blended for either purpose of further improving flame retardancy or further improving metal corrosion resistance.

As the hydrazine-based compound, a hydrazine-based compound having a hindered phenol structure is preferable, and specific examples thereof include a compound represented by the following formula (III).

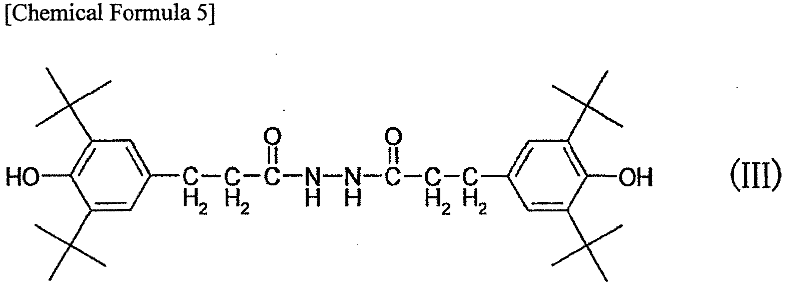

Specific examples of the trade names of the hydrazine-based compound having a hindered phenol structure include "CDA-10" made by Adeka Corporation and "IRGANOX MD 1024" made by BASF SE.

The flame-retardant resin composition of the present invention may further contain, if necessary, other additives such as a stabilizer, a colorant, an antistatic agent and a carbonation suppressing agent. Examples of the colorant include: pigments such as titanium oxide, zinc oxide, and carbon black; and dyes such as nigrosine. Examples of the stabilizer include a hindered phenol-based antioxidant, a sulfur-based antioxidant, a light stabilizer, a heat stabilizer composed of a copper compound and a heat stabilizer composed of alcohols. The carbonation suppressing agent is an additive to improve the tracking resistance; examples of the carbonation suppressing agent include inorganic substances such as metal hydroxides and metal borates, and above-described heat stabilizers.

In the present invention, when the cellulose fiber is dispersed or blended in advance in the polyamide resin as described above, the flame-retardant resin composition of the present invention can be produced by a method of blending a raw material other than the cellulose fiber with the polymerized cellulose fiber-containing polyamide resin. In the present invention, although the method of blending a raw material other than the cellulose fiber with the polymerized cellulose fiber-containing polyamide resin is not particularly limited, a melt-kneading method is preferable. Examples of the melt-kneading method include methods in which a batch-type kneader such as a Brabender, Banbury mixer, Henschel mixer, helical rotor, roll, single-screw extruder, twin-screw extruder, or the like is employed. The melt-kneading temperature is selected from the region in which the polyamide resin is melted, but the other components are not decomposed. When the melt-kneading temperature is too high, not only the polyamide resin (A) and the cellulose fiber (B) are decomposed, but also the metal phosphinate (C) may be decomposed; accordingly, with Tm representing the melting point of the polyamide resin (A), the melt-kneading temperature is preferably (Tm - 20°C) to (Tm + 50°C).

In the production of the flame-retardant resin composition of the present invention, the flame-retardant resin composition of the present invention can be processed into various shapes. Examples of the method for processing the flame-retardant resin composition of the present invention into various shapes include: a method in which a molten mixture is extruded into a strand shape and processed into a pellet shape; a method in which a molten mixture is hot cut or cut under water into a pellet shape; a method in which a molten mixture is extruded into a sheet-like shape and subjected to cutting; and a method in which a molten mixture is extruded into a block-like shape and pulverized into a powder form.

Molding may be performed using the flame-retardant resin composition of the present invention. Examples of the method for molding the flame-retardant resin composition of the present invention include an injection molding method, an extrusion molding method, a blow molding method, and a sinter molding method; among these, the injection molding method is preferable because of resulting in significant improvement effects of mechanical properties and moldability.

Examples of the injection molding machine include, without being particularly limited to, a screw in-line type injection molding machine and a plunger type injection molding machine. The polyamide resin composition heat-melted in a cylinder of the injection molding machine is measured every shot, injected into a mold in a molten state, cooled and solidified in a predetermined shape, and then taken out as a molded product from the mold. Although a heater set temperature during injection molding is preferably set to be equal to or higher than a melting point (Tm) of the polyamide resin (A), it is preferable that molding be performed at a temperature of 300°C or lower in order to suppress thermal decomposition and metal corrosion of the cellulose fiber.

When the flame-retardant resin composition is heat-melted, it is preferable to use a pellet of the flame-retardant resin composition of the present invention which has been dried sufficiently. When the water content is large, the flame-retardant resin composition pellet undergoes foaming in the cylinder of the injection molding machine, and accordingly sometimes it is difficult to obtain an optimal molded product. The water content of the flame-retardant resin composition pellet used for injection molding is preferably less than 0.3 parts by mass, more preferably less than 0.1 parts by mass, in relation to 100 parts by mass of the flame-retardant resin composition.

The flame-retardant resin composition of the present invention is excellent in mechanical properties, stiffness properties, flame retardancy, and metal corrosion resistance, and various parts having high fluidity and excellent appearance characteristics can be molded.

### EXAMPLES

Hereinafter, the present invention will be specifically described based on examples. However, the present invention is not limited to these examples. The obtained resin compositions were evaluated by the following methods.

### A. Evaluation method

### (1) Average fiber diameter

By using a freeze ultramicrotome, a 100-nm thick slice was sampled from a pellet of the resin composition obtained in Example/Comparative Examples, and dyed, and then the slice was observed with a transmission electron microscope (JEM-1230, made by JEOL Ltd.). From the electron microscopic image, the length of the cellulose fiber (monofilament) in the direction perpendicular to the lengthwise direction of the cellulose fiber (monofilament) was measured. At this time, the maximum length in the perpendicular direction was taken as the fiber diameter. In the same manner, the fiber diameters of any ten cellulose fibers (monofilaments) were measured, and the average value derived from the obtained ten fiber diameters was taken as the average fiber diameter.

In the case where the fiber diameter of the cellulose fiber was large, a 10-µm thick slice cut out with a microtome or the resin composition was observed as it is with a stereomicroscope (SZ-40, made by Olympus Corp.), the fiber diameter was measured from the obtained image in the same manner as aforementioned, and the average fiber diameter was determined.

### (2) Flame retardancy

The injection molding machine (α-100iA) made by Fanuc Corp. was used, a specimen was molded from the resin composition obtained in Example/Comparative Examples and dried sufficiently at a molding temperature of 280°C and a mold temperature of 100°C, and the flame retardancy of the specimen was measured according to the evaluation standard of UL94 (the standard specified by Under Writers Laboratories Inc., U.S.) of Table 1. The thickness of the specimen was set at 1.6 mm and 0.8 mm. In the present evaluation, the level of V-1 or higher was evaluated to be acceptable. A total afterflame time at the time of flame retardancy measurement is also shown. For example, even if the flame retardancy level is the same, for example, V-0, the shorter total afterflame time means that the flame retardancy is excellent.

### . Overall evaluation of flame retardancy

⊚: The flame retardancy level was V-0, and the total afterflame time was 25 seconds or less;
o: The flame retardancy level was V-0, and the total afterflame time was more than 25 seconds;
Δ: The flame retardancy level was V-1 (no problem in practical use); and
×: The flame retardancy level was V-2 (there was a problem in practical use).

**[Table 1]**

| Evaluation | V-0 | V-1 | V-2 |
|---|---|---|---|
| First afterflame time | 10 seconds or less | 30 seconds or less | 30 seconds or less |
| Sum of 10 afterflame times for 5 specimens | 50 seconds or less | 250 seconds or less | 250 seconds or less |
| Occurrence/non-occurrence of ignition of cotton by drips | Not **occurred** | Not occurred | Occurred |
| Burnout of sample | Not occurred | Not occurred | Not occurred |

### (3) Bending strength (mechanical properties) and flexural modulus (stiffness properties)

The resin composition obtained in Examples/Comparative Examples and dried sufficiently was injection-molded using an injection molding machine (NEX110-12E made by Nissei Plastic Industrial Co., Ltd.) at a molding temperature of 260°C and a mold temperature of 60°C, and a multipurpose specimen A type described in ISO standard 3167 was obtained.

The bending strength and flexural modulus of the obtained multipurpose specimen were measured by a three-point support bending method (distance between supporting points: 64 mm, test speed: 2 mm/min, test atmosphere: 23°C, 50% RH, absolute dry state) in accordance with ISO 178.

### • Bending strength

⊚: 110 MPa ≤ bending strength;
o: 105 MPa ≤ bending strength < 110 MPa;
Δ: 100 MPa ≤ bending strength < 105 MPa (no problem in practical use);
×: Bending strength < 100 MPa (there is a problem in practical use).

### • Flexural modulus

⊚: 4.0 GPa ≤ flexural modulus;
o: 3.5 GPa ≤ flexural modulus < 4.0 GPa;
Δ: 3.0 GPa ≤ flexural modulus < 3.5 GPa (no problem in practical use); and
×: Flexural modulus < 3.0 GPa (there is a problem in practical use).

### (4) Metal corrosion resistance

As shown in FIG. 1, a die (D) was fixed to a twin screw kneading extruder (EX) (PCM30, made by Ikegai Corp.), metal plates (MP) (material: SUS630, 20 × 10 mm, thickness: 5 mm, mass: 7.8 g) usually used as steel members of extruders were arranged above and below a flow path (R) of the molten resin so as to form a gap of 1 mm therebetween, and the molten resin was allowed to be brought into contact with the metal plates over a width of 10 mm and a length of 20 mm. Into the gap, a total amount of 25 kg of the resin composition obtained in Examples/Comparative Examples and dried sufficiently was extruded under the conditions of the extruder barrel temperature set at 280°C and the discharge rate set at 7 kg/h. After completion of the extrusion, the metal plates (MP) were disassembled and allowed to stand in a furnace set at 500°C for 10 hours, the attached resin was removed from the metal plates, the mass of the metal plates was then measured, and the metal corrosion resistance was measured from a mass change between before and after the extrusion. The smaller the weight change means that the metal corrosion resistance is excellent.

### • Mass change rate

⊚: Mass change rate ≤ 0.06%;
o: 0.06% < Mass change rate ≤ 0.10%;
Δ: 0.10% < Mass change rate ≤ 0.20% (no problem in practical use); and
×: 0.20% < Mass change rate (there is a problem in practical use).

### (5) Appearance characteristics

The resin composition obtained in Examples/Comparative Examples and dried sufficiently was injection-molded using an injection molding machine (NEX110-12E made by Nissei Plastic Industrial Co., Ltd.) at a molding temperature of 260°C and a mold temperature of 60°C, and a plate having a thickness of 50 × 90 × 2 mm was formed. A state of a surface was visually observed and judged according to the following criteria. Although the evaluation depends on the application, the evaluation of ○ (good) or higher is desirable.
⊚: There is no floating of the fibrous reinforcing material, and there is no roughness on the surface (best);
o: There is a slight amount of floating or surface roughness of the fibrous reinforcing material on one side, and there is none on the other side (good);
Δ: The fibrous reinforcing material slightly floats, and the surface is slightly rough (no problem in practical use); and
×: The floating and/or surface roughness of the fibrous reinforcing material is conspicuous (there is a problem in practical use).

### B. Raw materials

### (1) Polyamide resin

· PA6: Polyamide 6, A1030BRL (used as pellet PI) made by Unitika Ltd.
· PA66: Polyamide 66, A125 (used as pellet P2) made by Unitika Ltd.

### (2) Cellulose fiber

· KY100G: Celish KY100G made by Daicel Fine Chem Ltd., an aqueous dispersion containing 10% by mass of unmodified cellulose fibers having an average fiber diameter of 125 nm.
· KY100S: Celish KY100S made by Daicel Fine Chem Ltd., an aqueous dispersion containing 25% by mass of unmodified cellulose fibers having an average fiber diameter of 140 nm.

### • Bacterial cellulose (unmodified cellulose fiber):

Into a 200-mL volume Erlenmeyer flask, 50 mL of a culture medium having the composition including 0.5% by mass of glucose, 0.5% by mass of polypeptone, 0.5% by mass of yeast extract and 0.1% by mass of magnesium sulfate heptahydrate was dispensed, and was sterilized by steam at 120°C for 20 minutes in an autoclave. To this culture medium, a platinum loop of Gluconacetobacter xylinus (NBRC 16670) grown in a test tube slant agar medium was inoculated, and the resulting culture was subjected to a static incubation at 30°C for 7 days. After 7 days, a white gel film-like bacterial cellulose was produced in the upper layer of the culture liquid.

The obtained bacterial cellulose was crushed with a mixer, then repeatedly immersed in water and washed with water, and thus substitution with water was performed to prepare an aqueous dispersion containing 4.1% by mass of a bacterial cellulose having an average fiber diameter of 60 nm.

### • Waste thread (unmodified cellulose fiber):

Purified water was added to the cellulose fiber aggregate obtained as waste threads in a production process of a nonwoven fabric, and the resulting mixture was stirred with a mixer to prepare an aqueous dispersion containing 6% by mass of unmodified cellulose fibers having an average fiber diameter of 3240 nm.

### • TEMPO catalyst-oxidized cellulose (modified cellulose):

500 g (bone dry weight) of unbeaten bleached softwood kraft pulp (whiteness degree: 85%) was added to 500 mL of an aqueous solution in which 780 mg of TEMPO and 75.5 g of sodium bromide were dissolved, and the mixture was stirred until the pulp was evenly dispersed. An aqueous sodium hypochlorite solution was added to the reaction system in an amount of 6.0 mmol/g to start an oxidation reaction. During the reaction, the pH in the system decreased, and therefore, a 3M aqueous sodium hydroxide solution was added as appropriate to adjust the reaction system to pH 10. The reaction was terminated when sodium hypochlorite has been consumed and the pH in the system became constant. After the reaction, the mixture was filtered through a glass filter to separate the pulp, and the pulp was thoroughly washed with water to give an oxidized pulp. The oxidized pulp obtained in the process described above was adjusted to 1.0% (w/v) with water, and treated in a ultra-high pressure homogenizer (20°C, 150 MPa) for three cycles to prepare an aqueous dispersion containing 1.0% by mass of TEMPO catalyst-oxidized cellulose fibers having an average fiber diameter of 10 nm.

When the TEMPO catalyst-oxidized cellulose fiber was confirmed by ¹H-NMR, ¹³C-NMR, FT-IR, and acid-base titration, a part of a cellulose-derived hydroxyl group was substituted with a carboxyl group.

### . Ether-modified cellulose:

Water (19.94 kg) was added to 600 g of bleached softwood kraft pulp (made by Oji Paper Co., Ltd., solid content 25%) to prepare an aqueous suspension having a solid content concentration of 0.75% by mass. The obtained slurry was mechanically defibrated using a bead mill (NVM-2, made by Aimex Co., Ltd.) to obtain a cellulose fiber (zirconia bead diameter: 1 mm, loading amount of beads: 70%, number of revolution: 2000 rpm, and processing cycles: 2). The obtained cellulose fiber aqueous dispersion (100g) was placed in respective centrifuge tubes, and centrifuged (7000 rpm, 20 minutes), followed by removal of the supernatants, thereby giving precipitates. Acetone (100g) was added to each of the centrifuge tubes, and stirred well to disperse the precipitates in the acetone, followed by centrifugation to remove the supernatants, thereby giving precipitates. The above operation was repeated twice more to obtain a cellulose fiber acetone slurry having a solid content of 5% by mass.

The obtained cellulose fiber acetone slurry was placed into a four-necked 1L flask equipped with a stirring blade so that the solid content of the cellulose fiber became 5 g. N-methyl-2-pyrrolidone (NMP) (500 mL) and 250 mL of toluene were added, and the cellulose fiber was dispersed in NMP/toluene with stirring. A condenser was attached to the flask, and the dispersion was heated to 150°C in a nitrogen atmosphere to distill off the acetone and water contained in the dispersion together with toluene. Subsequently, the dispersion was cooled to 40°C, and then 15 mL of pyridine and 25 g of hexamethyldisilazane (silyl etherification agent) were added thereto. The mixture was subjected to a reaction in a nitrogen atmosphere for 90 minutes, thereby preparing an NMP dispersion of ether-modified cellulose fiber.

In the obtained NMP dispersion of ether-modified cellulose fiber, the cellulose fiber was precipitated by a centrifuge and replaced with water. This procedure was repeated three times, and preparation was carried out with water to prepare an aqueous dispersion containing 1.0% by mass of ether-modified cellulose fiber having an average fiber diameter of 100 nm.

When the ether-modified cellulose fiber was confirmed by ¹H-NMR, ¹³C-NMR, and FT-IR, a part of a cellulose-derived hydroxyl group was substituted with a hydrophobic silyl ether group.

### (3) Metal phosphinate

- Aluminum diethylphosphinate (Exolit OP1230 made by Clariant GmbH) (this compound is a compound represented by the general formula (I) (in the formula, R¹ = R² = ethyl group, m = 3, M = aluminum)).

### (4) Reinforcing material other than cellulose fiber

- GF glass fiber, ECS03T-262H made by Nippon Electric Glass Co., Ltd., average fiber diameter 10 µm
- CF carbon fiber, HTA-C6-NR made by Toho Tenax Co., Ltd., average fiber diameter 7 µm
- TALC (Microace K-1 made by Nippon Talc Co., Ltd.), average particle size 8 µm

### Production Example 1

As the aqueous dispersion of cellulose fiber, Celish KY100G was used; purified water was added to the aqueous dispersion and the resulting mixture was stirred with a mixer to prepare an aqueous dispersion having a cellulose fiber content of 3% by mass.

With a mixer, 33.33 parts by mass of the aqueous dispersion of the cellulose fiber and 99 parts by mass of ε-caprolactam were further stirred and mixed until a uniform dispersion was obtained. Subsequently, the resulting mixed dispersion was put into a polymerization apparatus and then heated to 240°C with stirring, and the pressure was increased from 0 MPa to 0.5 MPa while the water vapor was gradually being discharged. Then, the pressure was released to atmospheric pressure, and the polymerization reaction was performed at 240°C for 1 hour. At the time of completion of the polymerization, the resin composition was withdrawn in strands and cut to obtain a pellet of a resin composition in which the cellulose fiber was blended with a polyamide resin. The obtained pellet was treated with hot water at 95°C, refined and dried, and a pellet A of a polyamide resin composition containing dried cellulose fiber was obtained.

### Production Examples 2 and 3

Pellets B and C of a polyamide resin composition with which a dried cellulose fiber was blended were obtained by performing the same operations as in Production Example 1 except that the amount of Celish KY100G blended was changed so that the content of the cellulose fiber was a value shown in Table 2.

### Production Examples 4 to 8

Pellets D to H of a polyamide resin composition with which a dried cellulose fiber was blended were obtained by performing the same operations as in Production Example 1 except that the dispersion of the cellulose fiber was changed as shown in Table 2, and the amount of the dispersion of the cellulose fiber blended was changed so that the content of the cellulose fiber was a value shown in Table 2.

### Production Example 9

An aqueous dispersion (167 parts by mass) of having a content of the cellulose fiber obtained in Example 1 of 3% by mass and polyamide 66 salt (95 parts by mass) were stirred and mixed with a mixer until a uniform solution was obtained. Successively, the resulting mixed solution was heated while being stirred at 230°C until the internal pressure reached 1.5 MPa. After reaching this pressure; this pressure was maintained by continuing the heating while the water vapor was being gradually discharged. At the time where the temperature reached 280°C, the pressure was released to normal pressure, and the polymerization reaction was performed for further 1 hour. At the time of completion of the polymerization, the resin composition was withdrawn in strands and cut to obtain a pellet of a resin composition in which the cellulose fiber was blended with a polyamide resin. The obtained pellet was treated with hot water at 95°C, refined and dried, and a pellet I of a polyamide resin composition containing dried cellulose fiber was obtained.

### Production Examples 10 to 13

Pellets J to M of a polyamide resin composition with which a cellulose fiber was blended were obtained by performing the same operations as in Production Example 1 except that the amount of Celish KY100G blended was changed so that the content of the cellulose fiber was a value shown in Table 2.

### Production Example 14

As the aqueous dispersion of cellulose fiber, Celish KY100G was used; purified water was added to the aqueous dispersion and the resulting mixture was stirred with a mixer to prepare an aqueous dispersion having a cellulose fiber content of 3% by mass.

With a mixer, 1034 parts by mass of the aqueous dispersion of the cellulose fiber and 69 parts by mass of ε-caprolactam were further stirred and mixed until a uniform dispersion was obtained. Subsequently, the resulting mixed dispersion was put into a polymerization apparatus and then heated to 240°C with stirring, and the pressure was increased from 0 MPa to 0.5 MPa while the water vapor was gradually being discharged. Then, the pressure was released to atmospheric pressure, and the polymerization reaction was performed at 240°C for 1 hour. However, the viscosity was so high that withdrawing from the polymerization apparatus was difficult.

**[Table 2]**

| Type of pellet | | | Polyamide composition containing cellulose fibers | | | | |
|---|---|---|---|---|---|---|---|
| | | | Polyamide | | Cellulose fiber | | |
| | | | Type | Content | Type | Content | Parts by mass with respect to 100 parts by mass of polyamide |
| | | | | % by mass | | % by mass | part(s) by mass |
| Production Examples | 1 | Pellet A | PA6 | 99 | KY100G | 1 | 1.0 |
| | 2 | Pellet B | PA6 | 95 | KY100G | 5 | 5.3 |
| | 3 | Pellet C | PA6 | 85 | KY100G | 15 | 17.6 |
| | 4 | Pellet D | PA6 | 95 | KY100S | 5 | 5.3 |
| | 5 | Pellet E | PA6 | 95 | Bacterial cellulose | 5 | 5.3 |
| | 6 | Pellet F | PA6 | 95 | Waste thread | 5 | 5.3 |
| | 7 | Pellet G | PA6 | 95 | TEMPO catalyst-oxidized cellulose | 5 | 5.3 |
| | 8 | Pellet H | PA6 | 95 | Ether-modified cellulose | 5 | 5.3 |
| | 9 | Pellet I | PA66 | 95 | KY100G | 5 | 5.3 |
| | 10 | Pellet J | PA6 | 99.33 | KY100G | 0.67 | 0.67 |
| | 11 | Pellet K | PA6 | 88.9 | KY100G | 11.1 | 12.5 |
| | 12 | Pellet L | PA6 | 97.56 | KY100G | 2.44 | 2.5 |
| | 13 | Pellet M | PA6 | 93.44 | KY100G | 6.56 | 7.0 |

### Example 1

The pellet B (80% by mass) prepared in Production Example 2 and metal phosphinate (20% by mass) were supplied to a main hopper of a twin-screw extruder (TEM26SS made by Toshiba Machine Co., Ltd., screw diameter 26 mm), melt-kneaded at 260°C, withdrawn in strands, and cut to obtain a pellet of a resin composition.

### Example 2

The pellet J (75% by mass) and metal phosphinate (20% by mass) were supplied to a main hopper of a twin-screw extruder (TEM26SS made by Toshiba Machine Co., Ltd., screw diameter 26 mm) and melt-kneaded at 260°C. In the course of the melt-kneading, a reinforcing material (5% by mass) other than cellulose was supplied from a side feeder, melt-kneaded, withdrawn in strands, and cut to obtain a pellet of a resin composition.

### Examples 3, 5, 6 and 14 to 18 and Comparative Examples 1 to 5 and 11

Pellets of a resin composition were obtained in the same manner as in Example 1 except that the types and blending ratios of pellet, metal phosphinate and cellulose fiber were changed as shown in Table 3 or 4.

### Examples 4 and 7 to 13 and Comparative Examples 6, 8, 9 and 14

Pellets of a resin composition were obtained in the same manner as in Example 2 except that the types and blending ratios of pellet, metal phosphinate and a reinforcing material other than cellulose were changed as shown in Table 3 or 4.

### Example 19 and Comparative Example 10

Pellets of a resin composition were obtained in the same manner as in Example 1 except that the types of pellet and metal phosphinate were changed and the temperature was changed to 280°C as shown in Table 4.

### Comparative Example 7

A dispersion KY110G of a cellulose fiber was freeze-dried at -45°C using Tokyo Rika Kikai FD550 as a shelf freeze dryer, and pulverized using a crusher. A pellet of a resin composition was obtained by performing the same operations as in Example 1 except that 4% by mass of the obtained cellulose fiber powder, 76% by mass of pellet P1 and 20% by mass of metal phosphinate were dry blended, supplied to a main hopper of a twin-screw extruder, and melt-kneaded.

### Comparative Example 12

Although melt-kneading was performed in the same manner as in Example 2 except that the types and blending ratios of pellet, metal phosphinate and cellulose fiber were changed as shown in Table 4, the blending ratio of polyamide resin was too small, so that strand pulling was difficult, and a pellet of a resin composition could not be sampled.

### Comparative Example 13

Although melt-kneading was performed in the same manner as in Example 1 except that the blending ratios of pellet, metal phosphinate and cellulose fiber were changed as shown in Table 4, the amount of metal phosphinate blended was too large, so that strand pulling was difficult, and a pellet of a resin composition could not be sampled.

The composition of the resin composition and various evaluation results in each Example or Comparative Example are shown.

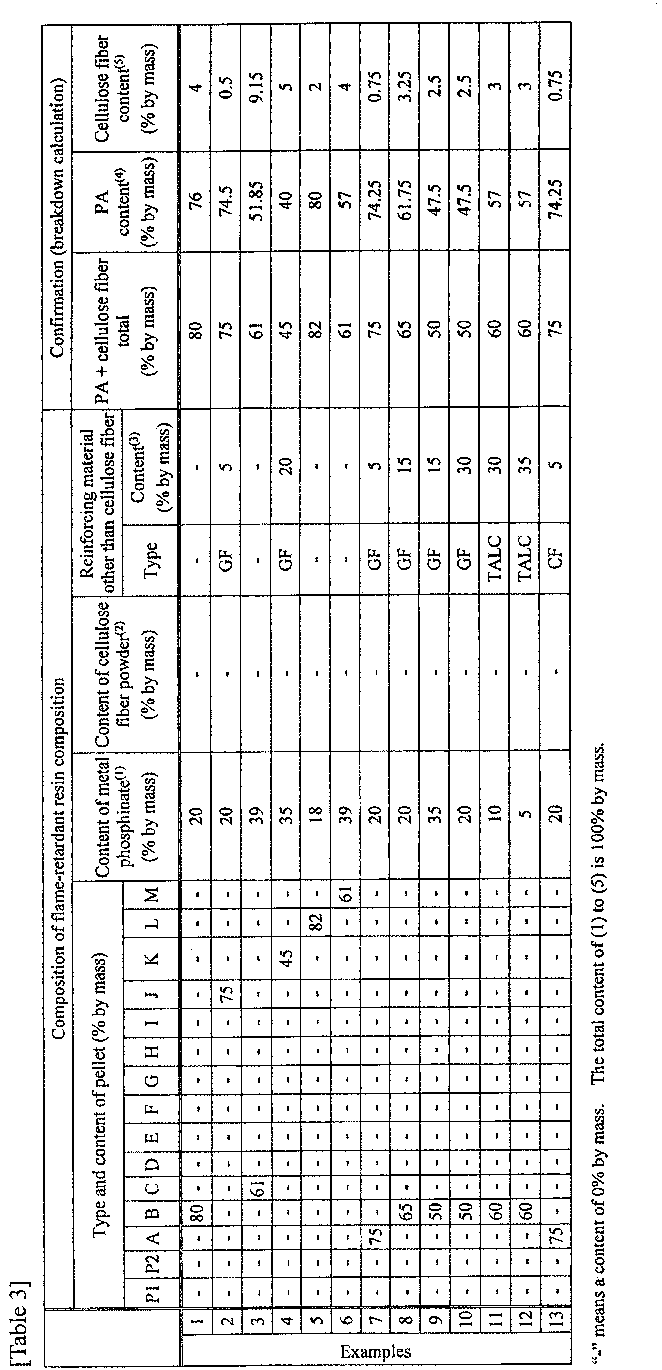

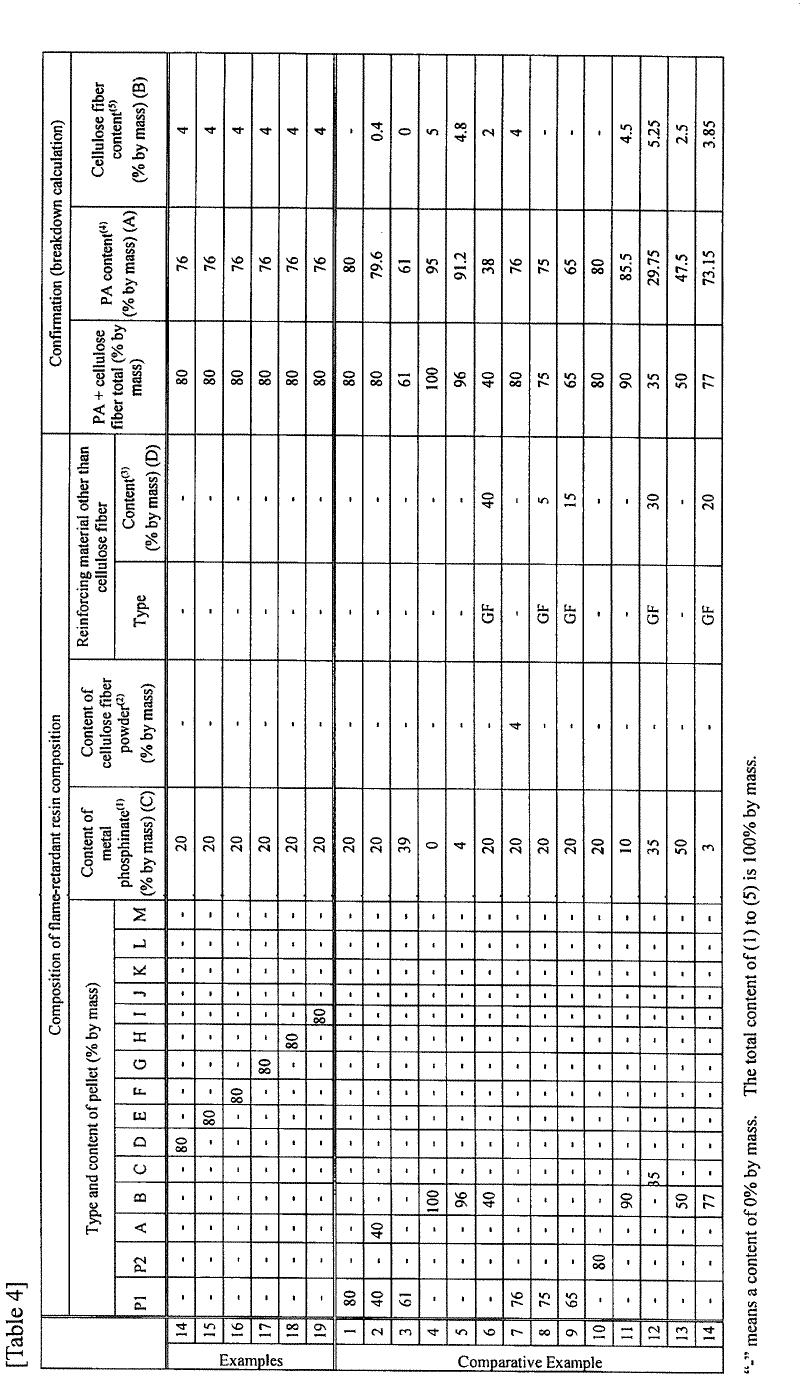

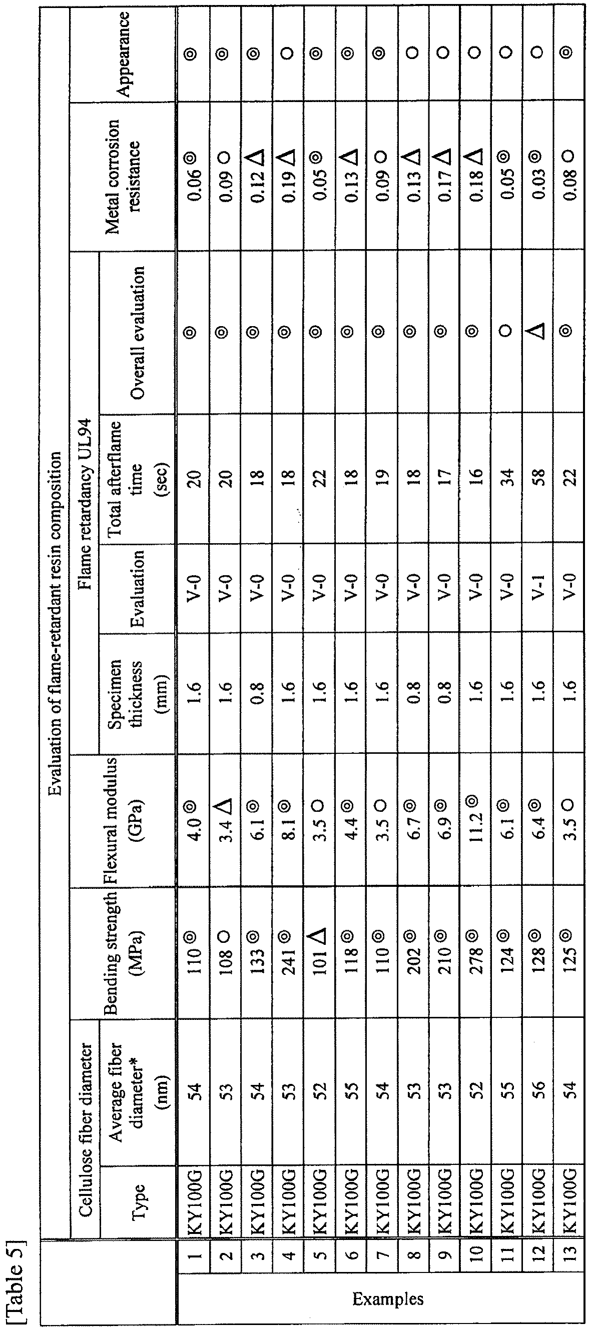

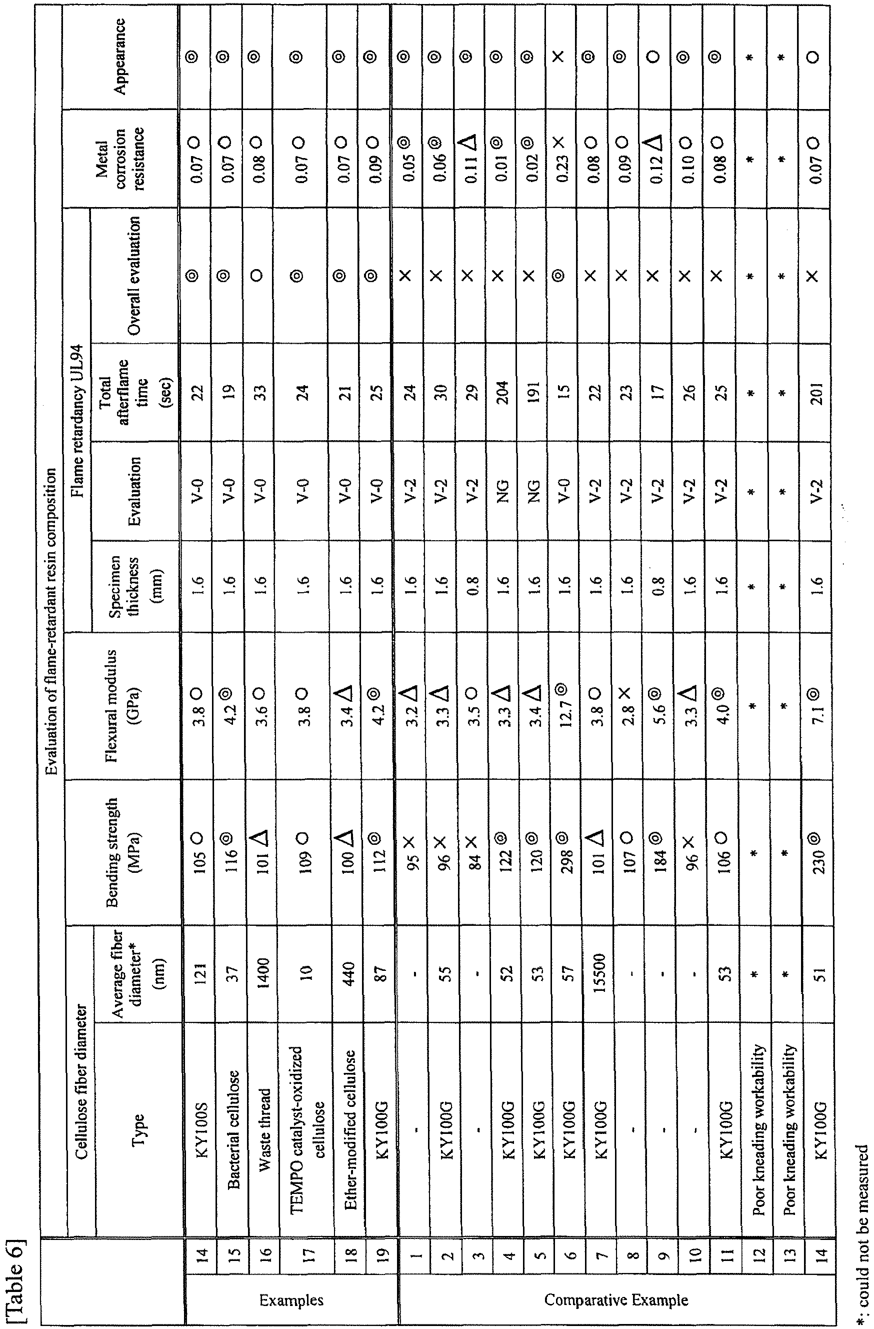

Examples 1 to 19 are excellent in mechanical properties, stiffness properties, appearance characteristics, flame retardancy and metal corrosion resistance.

Comparative Examples 1 to 3 have low mechanical properties and low flame retardancy because no cellulose fiber is contained or because the content of cellulose fiber is too small.

Comparative Examples 4 and 5 are inferior in flame retardancy because no flame retardant (that is, metal phosphinate) is contained or because the content of flame retardant is too small.

Comparative Example 6 is inferior in metal corrosion resistance and appearance characteristics because the content of glass fiber is too large.

Comparative Example 7 is inferior in flame retardancy because the diameter of cellulose fiber is too large.

Comparative Examples 8, 9 and 10 are inferior in flame retardancy because no cellulose fiber is contained

Comparative Example 11 is inferior in flame retardancy because the content of polyamide resin is too large.

Comparative Example 14 is inferior in flame retardancy because the content of flame retardant (that is, metal phosphinate) is too small.

For example, from comparison between Example 1 and Comparative Examples 1, 4 and 14, it can be seen that the combination of cellulose fiber and metal phosphinate synergistically improves the flame retardancy.

### INDUSTRIAL APPLICABILITY

Molded products obtained by using the flame-retardant resin composition of the present invention can be used as molded products in wide ranges of applications such as applications to transporting equipment parts such as vehicle components, aircraft components and railroad vehicle components, electric and electronic components, miscellaneous goods and civil engineering and construction components.

Examples of the vehicle components include: thermostat covers, IGBT module components of inverters, insulator members, exhaust finishers, power device enclosures, ECU enclosures, ECU connectors, electrical insulating materials for motors and coils, and coating materials for cables.

As aircraft components and railroad vehicle components, the molded products can be applied to various interior and exterior parts.

Examples of the electric and electronic components include: connectors, LED reflectors, switches, sensors, sockets, capacitors, jacks, fuse holders, relays, coil bobbins, breakers, electromagnetic switches, holders, plugs, enclosure components for electrical devices such as portable personal computers, resistors, ICs and LED housings.

### REFERENCE SIGNS LIST

- EX: Twin screw kneading extruder
- D: Die
- MP: Metal plate
- R: Flow path

## Claims

1. A flame-retardant resin composition, comprising:
35 to 85% by mass of a polyamide resin (A);
0.45 to 30% by mass of a cellulose fiber (B) having an average fiber diameter of 10 µm or less;
4.5 to 40% by mass of metal phosphinate (C); and
0 to 35% by mass of a reinforcing material (D) other than the cellulose fiber.

2. A flame-retardant resin composition of claim 1, wherein the metal phosphinate (C) is a compound represented by following general formula (I) or (II); 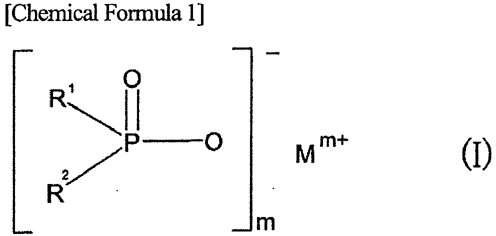 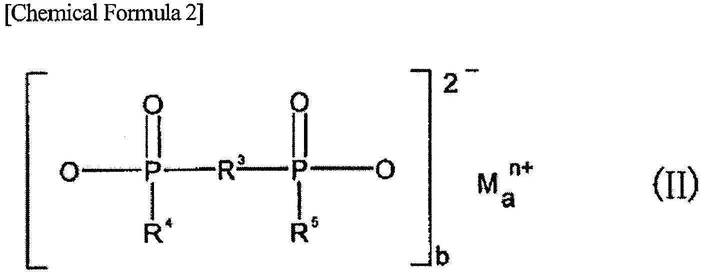
wherein R¹, R², R⁴ and R⁵ each independently represent a linear or branched alkyl group having 1 to 16 carbon atoms or a phenyl group;
R³ represents a linear or branched alkylene group having 1 to 10 carbon atoms, an arylene group having 6 to 10 carbon atoms, an arylalkylene group, or an alkylarylene group;
M represents a calcium ion, an aluminum ion, a magnesium ion or a zinc ion;
mis 2 or 3; and
n, a and b are integers satisfying the relation of 2 × b = n × a.

3. A flame-retardant resin composition of claim 1 or 2, wherein the reinforcing material (D) other than the cellulose fiber is one or more kinds of reinforcing materials selected from the group consisting of a fibrous reinforcing material, an acicular reinforcing material and a plate-shaped reinforcing material.

4. A flame-retardant resin composition of any one of claims 1 to 3, wherein a content of the metal phosphinate (C) is 8 to 40% by mass.

5. A flame-retardant resin composition of any one of claims 1 to 4, wherein an average fiber diameter of the cellulose fiber (B) is 1 to 1000 nm, and a content of the metal phosphinate (C) is 15 to 40% by mass.

6. A flame-retardant resin composition of claim 5, wherein
a content of the polyamide resin (A) is 62 to 79% by mass,
a content of the cellulose fiber (B) is 1 to 8% by mass, and
the average fiber diameter of the cellulose fiber (B) is 40 to 80 nm.

7. A method for producing the flame-retardant resin composition of any one of claims 1 to 6, comprising:
performing a polymerization reaction of a monomer constituting the polyamide resin (A) in the presence of the cellulose fiber (B), and then
melt-kneading the polyamide resin (A) in which the cellulose fiber (B) is dispersed together with the metal phosphinate (C) and the reinforcing material (D).
